(19) Europäisches Patentamt
European Patent Office
Office européen des brevets

(11) **EP 4 425 352 A1**

(12) **EUROPEAN PATENT APPLICATION**

(43) Date of publication:
**04.09.2024 Bulletin 2024/36**

(21) Application number: **23166114.1**

(22) Date of filing: **31.03.2023**

(51) International Patent Classification (IPC):
**G06F 17/18** (2006.01)    **G01D 3/08** (2006.01)
**G01D 21/00** (2006.01)    **G02B 21/36** (2006.01)
**G06T 5/50** (2006.01)

(52) Cooperative Patent Classification (CPC):
**G01D 3/08; G01D 21/00; G02B 21/367;
G06F 17/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.03.2023 EP 23159439**

(71) Applicant: **Siemens Aktiengesellschaft
80333 München (DE)**

(72) Inventor: **Engel, Thomas
73432 Aalen (DE)**

(74) Representative: **Siemens Patent Attorneys
Postfach 22 16 34
80506 München (DE)**

(54) **METHOD AND SENSING SYSTEM FOR DETERMINING AN OVERALL QUALITY INDICATOR QOX FOR A SENSOR BASED MEASUREMENT**

(57)    The invention relates to the determination of a quality indicator QoX for a sensor based measurement MEAS which typically includes a plurality of operations with individual quality indicators QoX(j). The approach includes that an operation process DOP processes measurement data generated in the measurement to determine a result corresponding to the measurement data. The operation process DOP includes operations DO(j) for the processing of the measurement data, wherein each operation DO(j) is characterized by a known individual quality indicator QoX(j). The overall quality indicator QoX is determined by a function QUALCALC from a pre-defined combination of the individual quality indicators QoX(j) .

FIG 4

EP 4 425 352 A1

**Description**

The invention relates to the determination of a quality indicator QoX for a sensor based measurement MEAS which typically includes a plurality of operations with individual quality indicators.

Various measurement scenarios apply sensors to determine the present state for a specific variable like temperature, pressure, humidity, length, weight, color etc. Corresponding measurements are performed in changing environments under dynamic, variable conditions of the environment which influence the quality of the measurement. Parameters which are influencing the measurement result directly and deterministically are taken into account when determining a corrected measurement value and its measurement uncertainty. However, other factors like, just for example, parameters characterizing environmental conditions of a measurement, e.g. sound level, electromagnetic coupling, stray light or unwanted (false) light as background etc. or the signal level of a measurement signal, from which a measurement is derived, are ignored or neglected. In general terms, such factors might be described to be orthogonal to the considered measurement values and data. The concept of "Quality of Sensing" (QoS), "Quality of Data" (QoD), or "Quality of Information" (QoI), generalized and abbreviated as "QoX", wherein "X" can be, for example, S, D, or I, represents an approach to report such other factors or circumstances at or around the point in time of the respective measurement. In very general terms, QoX serves to give the gut feeling of a metrologist a voice in a digital world.

However, QoX and respective measurement values are related parameters in most cases and a concept is required for QoX to be used and also propagated quasi analog or parallel, respectively, to the measurement values.

Therefore, a solution is required which serves the need to provide a quality indicator QoX for a measurement which considers various influences. This is solved by the method suggested in claim 1, by the evaluation system as per claim 12, and by the Computer program of claim 15.

A method is proposed for determining an overall quality indicator QoX for a measurement MEAS, e.g. a sensor based measurement, i.e. for a result RES of the measurement MEAS and/or for an operation which processes measurement data MDAT of the measurement MEAS to derive the result RES. Such sensor based measurement MEAS provides one or more measurement values and the quality indicator QoX represents a trustworthiness or trust level, respectively, which is associated with the measurement values. In other words, QoX represents aspects characterizing the circumstances of a measurement which are not covered and contributing to measurement uncertainty.

However, the method includes that an operation process DOP processes measurement data MDAT generated in the measurement MEAS to determine a result RES corresponding to the measurement data MEAS. Therein, the measurement data can be the original voltages or currents provided by the sensors. Moreover, the processing of the measurement data can include the very first processing of original voltages and/or currents etc. provided by the sensors as well as further processing of measurement data which have been processed in earlier stages. The operation process DOP includes one or more operations DO(j) for the processing and/or further processing, as indicated above, of the measurement data MDAT, wherein each operation DO(j) is characterized by a known individual quality indicator QoX(j). The overall quality indicator QoX is determined by a function QUALCALC from a pre-defined combination of the individual quality indicators QoX(j), e.g. a function to calculate a harmonic, arithmetic, geometric, or generalized mean or based on a polynomial or other pre-defined function.

The pre-defined combination can process the individual quality indicators QoX(j) to determine a mean value QoX of the individual quality indicators QoX(j), e.g. a harmonic, arithmetic, geometric, or generalized mean, wherein the determined mean value represents the overall quality indicator QoX. As an alternative to the mean value calculation, the combination can be realized as a polynomial function.

Each individual quality indicator QoX(j) can be assigned a weight w(j). In that case, the pre-defined combination can be a weighted combination, wherein the pre-defined weighted combination processes the individual quality indicators QoX(j) and their assigned individual weights w(j) to determine a weighted mean value QoX=wQoX of the individual quality indicators QoX(j), wherein the determined weighted mean value QoX=wQoX represents the overall quality indicator QoX.

Therein, the individual weights w(j) can correspond to differentials diff(j)=d_FUNC/d_res(j) of a formula FUNC which mathematically represents the operation process DOP and the entirety of its operations DO(j), wherein res(j) are results and output values of respective operations DO(j) of the operation process DOP and wherein each differential diff(j)=d_FUNC/d_res(j) represents the contribution CON(j) of the respective individual quality indicator QoX(j) to the overall quality indicator QoX and of the particular operation DO(j) to the operation process DOP.

In an approach of "a priori scaling of all elements" as introduced below, the individual weights w(j) corresponding to the differentials diff(j)=d_FUNC/d_res(j) can be scaled and selected, respectively, such that the entirety of individual weights w(j) sums up to a given value, preferably to a value of 1.

In an approach of "scaling relative to the weakest element" as introduced below, the individual weights w(j) corresponding to the differentials diff(j)=d_FUNC/d_res(j) can be scaled and selected, respectively, such that the lowest individual weight w(k), i.e. the individual weight w(k) of the particular individual quality indicator QoX(k) which is assigned to the operation DO(k) which has the least contribution to the overall operation process DOP, is set to a given fixed value FXG, e.g. predefined FXG=1. The individual weights w(k') with k'≠k can be set according to w(k')=FXG+d(k'), wherein d(k')>0 depends on the contribution CON(k') of the respective operation DO(k') to the overall operation process DOP such that, preferably, a stronger contribution CON(k') leads to a larger d(k'). For example, d(k')=A*CON(k')+B might be applicable with A, B being further weighting parameters which might be chosen essentially arbitrarily depending on the application scenario.

Preferably, one or more group quality indicators $QoX_{GR}(g)$ can be calculated, wherein each group quality indicator $QoX_{GR}(g)$ can be calculated as a weighted combination, e.g. a weighted harmonic, arithmetic, geometric, or generalized mean. Such combination can process such individual quality indicators QoX(j') and their assigned weights w(j'), which are comparable to each other, e.g. which are assigned to operations DO(j') which are comparable to each other or which have a given feature in common or which have comparable assigned weights, respectively, e.g. corresponding to the same type of sensor or corresponding to the same type of measurement or data processing operation. The overall quality indicator QoX can then be calculated as a weighted combination, e.g. a weighted harmonic, arithmetic, geometric, or generalized mean, which combination processes the group quality indicators $QoX_{GR}(g)$ and respective, corresponding, assigned group weights $w_{GR}(g)$.

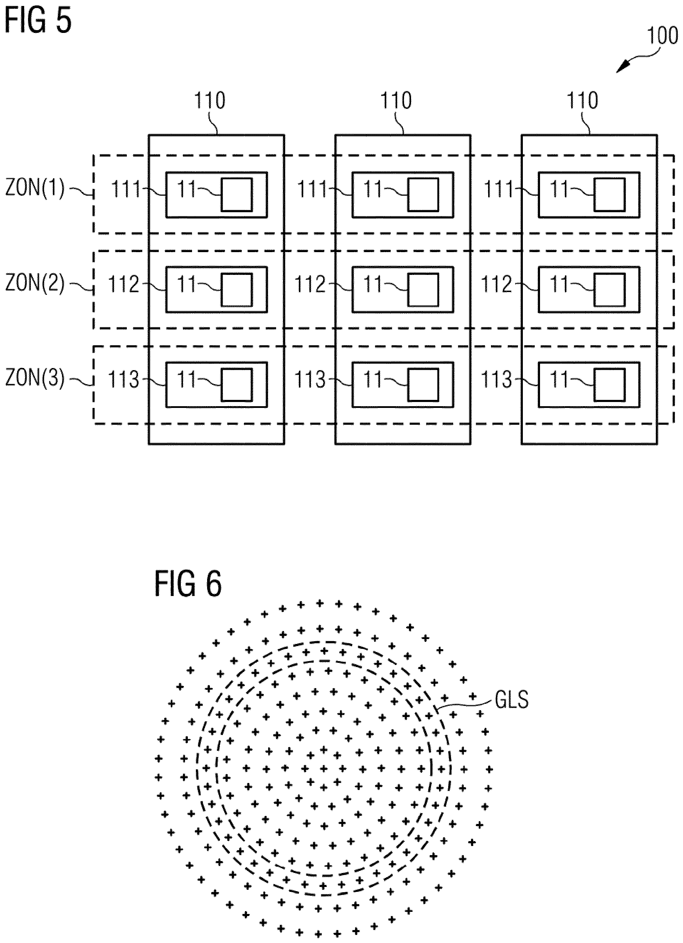

In an approach of "groupwise scaling of all group elements" as introduced below, the individual weights w(j) can be scaled and selected, respectively, such that, for each group quality indicator $QoX_{GR}(g)$, the entirety of individual weights w(j') of those individual quality indicators QoX(j'), which contribute to the respective group quality indicator $QoX_{GR}(g)$, sums up to a fixed value FXV, e.g. FXV=1, and the respective group weight $w_{GR}(g)$ can be set according to the respective importance and contribution, respectively, with respect to the other group quality indicators $QoX_{GR}(g')$ with g'≠g. The setting of the group weights $w_{GR}(g)$ can be derived from the setup and scenario of the underlying measurement for which the overall indicator QoX shall be determined. Anticipating FIG 6 and the Fourier Ptychography microscope described below, the light sources on the same concentric circle can be considered to be comparable to each other, therewith forming a group. Respective group weights $w_{GR}(g)$ of different circles and groups, respectively, can be set based on expert or domain knowledge such that an inner circle and group, respectively, has a higher group weight $w_{GR}(g)$ than an outer circle and group, respectively.

In an approach of "separate scaling for each group" as introduced below, those individual quality indicators QoX(j') can be selected to contribute to the same group quality indicator $QoX_{GR}(g)$ which have comparable assigned weights w(j'), e.g. in a range of ±5% around an average value or using some other suitable criteria, depending on the application scenario. In principle, the individual weights w(j') of those individual quality indicators QoX(j'), which contribute to the respective group quality indicator $QoX_{GR}(g)$, can be set to the same fixed value FXV, e.g. FXV=1. Each particular group quality indicator $QoX_{GR}(g)$ can be calculated as a mean value e.g. a harmonic, arithmetic, geometric, or generalized mean, of the individual quality indicators QoX(j') contributing to that particular group quality indicator $QoX_{GR}(g)$. The group weights $w_{GR}(g)$ of the group quality indicators $QoX_{GR}(g)$ can be selected such that the group quality indicators $QoX_{GR}(g)$ are properly weighted with respect to each other, preferably such that, for a particular group quality indicator $QoX_{GR}(g')$, the group weight $w_{GR}(g')$ is selected to be the weight w(j'), preferably the mean weight w(j'), of the individual quality indicators QoX(j') contributing to the particular group quality indicator $QoX_{GR}(g')$.

Each operation DO(j) can receive and process input data and generate a result res(j) based on such input data. For example, the input data for an operation DO(j) might be the result res(j-k) of a preceding operation DO(j-k) with k≥1. Therein, the quality indicator QoX(j) characterizing the data operation DO(j) represents a quality or trust level of the result res(j). Input data of an operation DO(j) might be results res(j') generated by other operations DO(j'). In the special case that an operation DO(j) is actually the measurement itself, e.g. performed by a sensor, the input data would be the parameter to be measured, e.g. an environment temperature at the location of a temperature sensor.

A respective operation DO(j) might include sensing of a parameter to be measured and/or sampling of the measurement data MDAT, i.e. the original actions performed by the sensors at the very beginning of the measurement process MEAS, resulting in voltages or currents etc., and/or making data agnostic to a respective measurement system and/or provisioning of data from a first instance to a second instance of a measurement system, e.g. from a sensor to an evaluation system or to a component of the evaluation system or from a first component of the evaluation system to a second component, and/or processing of data and/or combining data provided by a first sensor of the measurement system with data provided by another sensor of the measurement system to generate new data and/or feeding data to mathematical or physical models and/or fusing the data into a more concise dataset and/or mimicking new or non-physical sensors by a software which is known as soft sensing or virtual sensor and/or applying a method of computer learning or artificial intelligence on the data. In each case, such data can be the measurement data itself or measurement data previously processed in an operation DO(j') with j'Oj. In general, the data is used in multiple subsequent or parallel operations DO(j) for further analysis and utilization as sketched above.

A sensing device introduced herein comprises a sensor arrangement with at least one sensor for performing the measurement MEAS and an evaluation system. Therein the sensor arrangement is connected to the evaluation system for providing measurement data MDAT generated in the measurement MEAS and the evaluation system is configured to determine the overall quality indicator QoX for the measurement MEAS according to any one of claims 1 to 10.

The evaluation system for such a sensing device, which comprises the sensor arrangement with at least one sensor for performing the measurement MEAS, is configured to determine the overall quality indicator QoX for the measurement MEAS according to the method introduced above.

Therein, the evaluation system comprises a processor for carrying out the steps of the method introduced above.

Moreover, the evaluation system is connected to a sensor arrangement of the sensing device, wherein the sensor arrangement comprises at least one sensor for performing the measurement MEAS to generate the measurement data MDAT.

A respective computer program comprises instructions which, when the program is executed by a computer, cause the computer to carry out the steps of the method introduced above.

According to another aspect of the present invention, a computer-readable medium has stored thereon such computer program.

According to a further aspect of the present invention, a data processing system comprises means for carrying out the steps of the method according to the first aspect of the present invention.

According to another aspect of the present invention, a distributed system for providing a domain model for an industrial system may, in particular, be configured to execute the computer-implemented method according to the first aspect of the present invention and comprises at least one local computer of at least one customer, an external computer of a service provider and at least one data connection between the at least one local computer and the external computer.

A measurement in the spirit of the above would provide both one or more measurement values or a corresponding result of the operation DOP and the overall quality indicator QoX. The availability of the additional information QoX allows to assess reliability or accuracy etc. of the result and of the operation DOP, which can be used furtheron, for example, to assign different weights or importance to different results for further processing. This has direct impact on controlling or operation of a technical system, the control of which directly depends on the results of measurement values and outcome of the operation DOP. For example, in case several measurements and operations DOP, respectively, are performed, each of which is characterized by an overall indicator QoX and each of which can influence the controlling of the technical system, the different results of the operations DOP can be considered more or less in the controlling of the technical system, depending on the respective indicators QoX. A higher indicator QoX would typically entail stronger influence of the respective data on the controlling of the system. This assures a better operation of the technical system, be it with regard to its efficiency, with regard to its safety, or with regard to any other suitable KPI or other parameter, depending on the context and application scenario of the technical system. In addition to that an in general terms, instead of filtering out "bad" data which, for example, are outside a certain predefined range, it is more valuable to have such data available but characterized by a low indicator QoX.

Unless otherwise stated in the following description, the terms "carry out", "calculate", "computer aided calculate", "determine", "generate", "configure", "reconstruct" and the like preferably refer to actions, processes, or processing steps which change or generate data or convert data into other data, whereby the data are or may be represented or present in particular physical quantities. In particular, the term "computer" is to be interpreted as broadly as possible to cover all electronic devices with data processing characteristics. Computers can thus be, for example, personal computers (PCs), quantum computers, servers, programmable logic controllers (PLCs), handheld computer systems, pocket PC devices, mobile telephones, smart phones and other communication devices that can process data by means of processors and other electronic devices for data processing.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:

FIG 1     shows a data operation process for determining a result from a sensor based measurement,
FIG 2     shows a sensing device with one sensor,
FIG 3     shows a sensing device with a plurality of grouped sensors,
FIG 4     shows data operation process for determining a result from a sensor based measurement with the sensing device of FIG 3,
FIG 5    shows a pump station,
FIG 6    shows an arrangement of light sources for a Fourier Ptychography microscope.

DETAILED DESCRIPTION

Typically, measurements, e.g. sensor based measurements, are more complex in the real world than in theory or under idealized laboratory conditions since influences and effects, e.g. based on the environment and other circumstances, which directly influence the measurement value and the measurement uncertainty, have to be taken into consideration. The determination of measurement uncertainties is governed in the "Guide to the Expression of Uncertainty in Measurement" (GUM) of the International Bureau of Weights and Measures (BIPM). Further aspects valuable to characterize the circumstances of a measurement which are not covered and contributing to measurement uncertainty can be described by dedicated quality indicators QoX. These indicators can be determined in the domain of sensing for the measurement, expressed by "Quality of Sensing" (QoS), in the domain of data while working with such data, expressed by "Quality of Data" (QoD), e.g. applicable for software based sensors, data fusion, or data evaluation by computer learning and artificial intelligence, and in the domain of information, expressed by "Quality of Information" (QoI), e.g. applicable when interpreting data and deriving information. The different aspects QoS, QoD, QoI which are subsumed and generalized under "QoX" characterize a trustworthiness or trust level, which can be associated with the data.

Such a quality indicator QoX is determined for data from measurements or any kind of data based operations or for information which is generated in data based applications. Therein, QoX might be static, e.g. as a reference for a calibration data set, for an individual measurement value in a calibration data set or a calibration measurement. Also, a quality indicator QoX might be a dynamic parameter, e.g. being determined for every measurement value of a sensor measurement.

In general, a quality indicator QoX can be expressed with any type of data, e.g. by a measurement value with a suitable unit or by a relative unit, e.g. in dB or %. For the reason of interpretability and to ease further arithmetics with quality indicators QoX of different sources according to the needs of a given measurement scenario, it is preferred, that quality indicators QoX are represented as real numbers in the range [0; 1]. Therein, "0" represents no quality or no trust level, respectively, while "1" represents maximum quality or trust level. For example, the scale between the extreme values "0" and "1" might be a linear one to ease further data utilization.

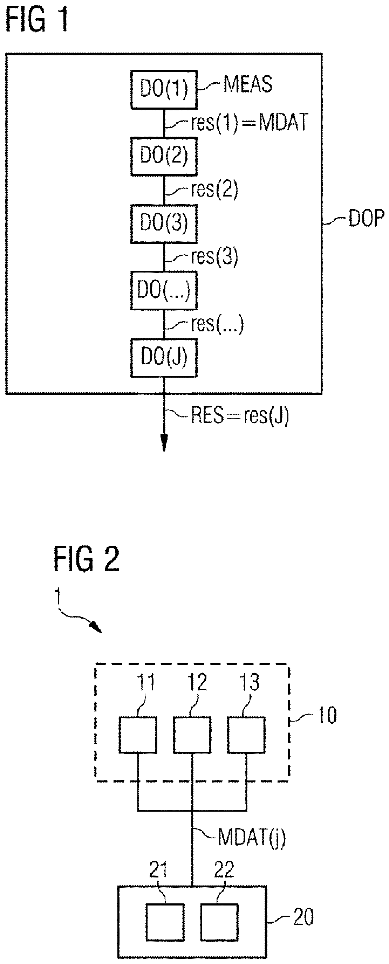

However, a first exemplary measuring scenario includes an operation process DOP as indicated in FIG 1 with a plurality of operations or steps $DO(j)$ with $j=1,2,...,J$ and $J$ standing for the number of required or desired steps. The operation process DOP processes measurement data MDAT of a sensor based measurement MEAS to produce a result RES, i.e. a measurement value RES. In the first exemplary scenario, the sensor based measurement MEAS is executed by a sensor arrangement 10 with a sensor 11 as shown in FIG 2. For example, sensor 11 can be a temperature, pressure, humidity, voltage, current, vibration, noise level, light flux, gas, flow, position, level, tilt, or any other suitable type of sensor. The selection of the sensor type as well as its spatial arrangement and settings like accuracy, sensitivity, measurement rate, etc. depend on the purpose of the measurement to be performed by the sensor arrangement 10.

In any case, the sensor 11 produces measurement data MDAT, e.g. a time series of measurement data, which are provided to an evaluation unit 20 of the sensing device 1. The evaluation unit 20 is a computer implemented system with a processor 21 for executing a software and with a memory 22 for storing the software and for storing measurement data MDAT measured with the sensor arrangement 10, i.e. with the sensor 11. The operation DOP to be described below is performed by executing the software with the processor 21.

Typically, the operation process DOP of a measuring scenario according to FIG 1 includes a plurality of steps and operations $DO(j)$, respectively, for processing the measurement data MDAT provided by the sensor arrangement 10. Each operation $DO(j)$ with $j>1$ might receive input data from a previous operation $DO(j-1)$ and produces an intermediate result $res(j)$. For example, a first operation $DO(1)$ might actually be the measurement process itself, as performed by the sensor 11 and the result $res(1)$ of the operation $DO(1)$ is the measurement data MDAT. A second operation $DO(2)$ might focus on making the data MDAT agnostic to the respective measurement system. A third operation $DO(3)$ might combine measurement data $MDAT(i)$ of the sensor 11 with other data xDAT to generate new data, e.g. in order to feed mathematical or physical models, fuse data into a more concise dataset, and/or mimic new or non-physical sensors by software, which is described as soft sensing or virtual sensing etc. For example, xDAT might be measurement data from other, not shown sensors and/or it might be measurement data of the same sensor 11 which have been sampled at earlier points in time. In further operations $DO(...)$, methods of computer learning or artificial intelligence can be applied. A final operation $DO(J)$, which might be any one of the steps introduced above or anything else required for the purpose of the measurement to be performed by the sensor arrangement 10, e.g. a step of filtering, provides the result RES which represents the original measurement data MDAT.

For the sake of clarity, the above listing of operation $DO(j)$ of the operation process DOP must not necessarily considered to be complete, i.e. further steps might be added. Moreover, different operations $DO(j)$ might be executed in any suitable sequence, certain operations might be left away, some operations might be executed more than once, and/or, as mentioned, further operations might be added. Actually, the simplest embodiment of the operation process DOP would be limited to the pure provisioning of the original, physical measurement data as the result RES, e.g. an electric charge, a voltage or a current produced by the respective sensor, without further processing.

In general terms, the first exemplary measurement scenario includes execution of several operations DO(j), each one resulting in an intermediate result res(j).

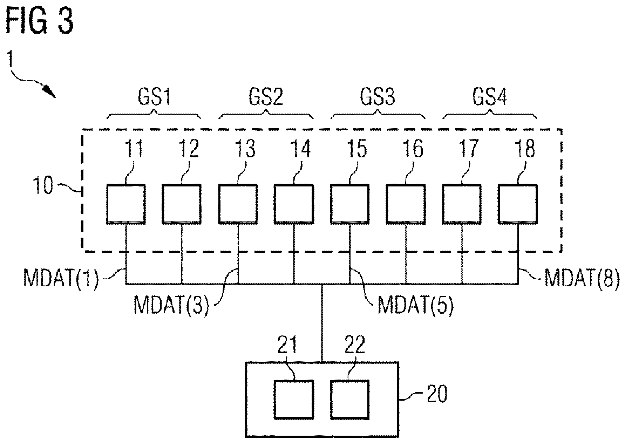

A second exemplary measurement scenario as depicted in FIG 3 assumes that the sensing arrangement 10 comprises a plurality of sensors 11-18. Again, the sensors 11-18 can be any type of sensor as listed in the first measurement scenario, wherein different sensors might be, but don't have to be, of a different type. However, in a special exemplary realization of the second measurement scenario, sensors 11-12 are temperature sensors, sensors 13-14 are pressure sensors, sensors 15-16 are noise level sensors, and sensors 17-18 are flow sensors. Thus, four different groups GS1-GS4 of sensors are available. In that example, sensors of the same sensor type form a sensor group. However, in a different example, other criteria might be applied to select the sensors for forming a senor group. In general terms, those sensors which have a certain feature in common, e.g. the sensor type, might be selected to form a group GS. In operations DO(1) - DO(8), each one of the sensors 11-18 generates measurement data MDAT(1) - MDAT(8), wherein FIG 3 lists only a few of the respective reference signs MDAT(i) for the sake of clarity. The resulting measurement data MDAT(1) - MDAT(8) are provided to an evaluation unit 20 of the sensing device 1 which might be embodied as the one of the first measurement scenario to derive the result RES from the input data MDAT(1) - MDAT(8).

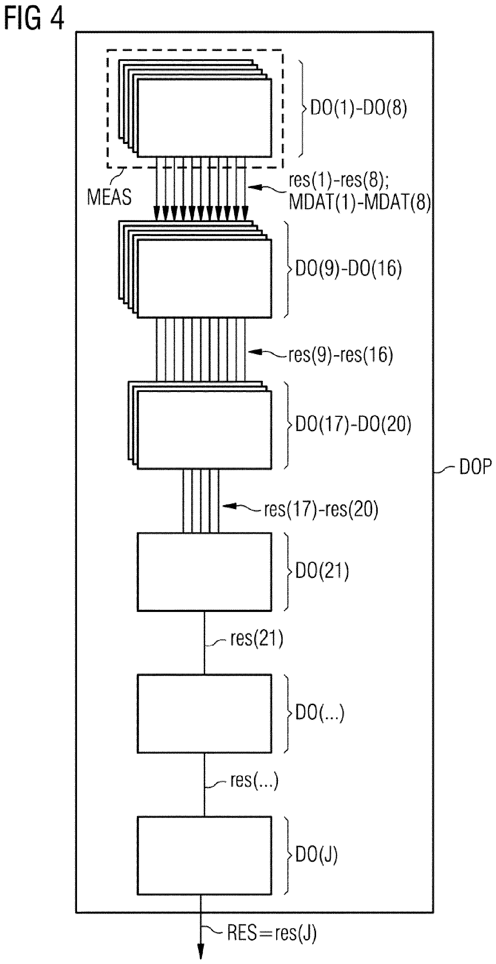

FIG 4 shows an operation process DOP performed by the evaluation system 20, similar to the process shown in FIG 1, but adapted to the second measurement scenario. As explained in the context of FIG 3, the measurement MEAS with the plurality of sensors 11-18 provides measurement data MDAT(1) - MDAT(8) as results res(1) - res(8) of operations DO(1) - DO(8) of the operation process DOP. The operation process DOP foresees in this example, that the measurement data MDAT(i) are not yet combined with each other. Instead, each data MDAT(i) is processed individually in a corresponding individual operation DO(i) which might be performed in parallel to each other. For example, measurement data MDAT(1)=res(1) of sensor 11 is further processed in operation DO(9) to produce an intermediate result res(9), while measurement data MDAT(8)=res(8) of sensor 18 is processed in operation DO(16) to produce an intermediate result res(16) etc. For example, the operations DO(9) - DO(16) might be suitable data filtering operations to reduce noise or similar. The intermediate results res(9) - res(16) are further processed in operations DO(17) - DO(20) to generate further results res(17) - res(20). Just for example, operations DO(17) - DO(20) might generate mean values res(17) - res(20) of measurement data of sensors of the same type and of one respective sensor group GS, respectively, i.e. res(17) might be the mean value of res(9) and res(10). An operation DO(21) processes the results res(17) - res(20) to generate another result res(21), e.g. based on an artificial intelligence approach or further filtering or amplification etc. In further steps DO(...), other data processing operations might be applied to generate further results. However, a final step DO(J) provides the desired result RES=res(J).

The constellation of operations DO(j) in the context of FIG 4 is purely exemplary. There might be more or less operations and the combination of results res(j) might happen at an earlier stage or even at a later stage of the process DOP. The basic message is that, like in the first measurement scenario, the operation process DOP includes a plurality of operations DO(j), each of which generates intermediate results res(j).

A third exemplary measurement scenario relates to a concrete setup of a Fourier Ptychography (FP) microscope as described in WO2021/053374A1. In short, the FP approach builds on sampling a plurality of individual images of an object, e.g. with a regular camera sensor. A high-resolution image IMA of the object is then calculated from the individual images. Different ones of the individual images are sampled under different illumination conditions. For example, different illumination conditions can be created by illuminating the object for each individual image from a different direction. FIG 6, which corresponds to figure 6 of WO2021/053374A1, shows the positions of a plurality of light sources for illuminating the object to be imaged (not shown in FIG 6). As can be seen, the light sources are arranged on concentric circles and, therewith, at different locations so that the different illumination conditions can be created by sequentially switching different light sources on and off. Each time one particular light source is switched on, an individual image is captured with the camera sensor. Each capturing of an individual image is considered an operation DO(j) as introduced above. The camera sensor takes a plurality of individual images, representing a plurality of operations DO(j), while the sampled individual images themselves represent the results res(j) as introduced above. The high-resolution image IMA represents the final result RES. Thus, the corresponding operation process DOP (not shown) includes a number N of operations DO(1),...,DO(N) of image capturing to produce the individual images res(1),..., res(N), wherein N corresponds to the number of light sources. Thereafter, a number M of additional operations DO(N+1),..., DO(N+M) might be performed, e.g. filtering, Fourier transformations, combinations of images etc., with respective results res(N+1),..., res(N+M), before a final operation DO(J) is executed to generate the high-resolution image IMA as the result RES of the overall operation process DOP.

Again, as in the first and in the second measurement scenario, the basic message is that the operation process DOP includes a plurality of operations DO(j), each of which generates intermediate results res(j).

In all measurement scenarios, the respective evaluation system 20 is configured to determine an overall quality indicator QoX for the result RES. However, the overall quality indicator QoX can also be interpreted to represent the quality of the operation process DOP, which processes measurement data MDAT of the sensor based measurement MEAS to derive the result RES, since the result RES is typically directly related to the operation process DOP. The formulation used below, that an overall quality indicator QoX is determined for the measurement MEAS, shall cover both interpretations, i.e. that the overall quality indicator QoX is determined for the result RES and that the overall quality indicator QoX is determined for the operation process DOP.

As shown in FIGs 1 and 4, each one of the overall operation processes DOP typically includes a plurality of individual operations DO(j) for propagating the measurement data MDAT to generate the result RES, wherein each operation DO(j) produces an intermediate result res(j) which is further processed in further operations DO(j') with $j' \neq j$. For most or, in the best case, for all individual operations DO(j) and their intermediate results res(j), respectively, individual quality indicators QoX(j) are available. The approach pursued herein to determine the overall quality indicator QoX for the operation DOP in a method QUALCALC applies the principle that not only the measurement data MDAT are propagated in the data chain expressed by the operation process DOP, but that also the individual quality indicators QoX(j) are propagated in an appropriate way, corresponding to the processing under the operation process DOP. Therein, each individual quality indicator QoX(j), which corresponds to an individual step DO(j) and its intermediate result res(j), respectively, gives an indication or estimate for the respective data quality or trust level for the intermediate results res(j) as produced in the respective step DO(j) of the operation DOP. Such individual quality indicators QoX(j) can be assumed to be known for many applications. In known approaches, they might be determined in parallel to the measurement or to the determination of the data res(j), each based on accompanying measurements or acquisition of further required parameters, or they might be estimated based on suitable models for quality indicator determination. An exemplary application might be the evaluation of images captured with a camera for which indicators like the signal-to-noise -ratio SNR or the utilized dynamic range are well known to the skilled person. An exemplary application might be related to the operation voltage of a battery powered sensor which can be influenced by high frequency EMC interferences. As soon as such interferences are so high that they cause significant contributions to the voltage supply of the sensor, the sensor's measurement value might be influenced. However, the pattern of the supply voltage's fluctuations can be assessed by the indicator QoX, e.g. QoS. Low QoS would express that there might have been a disturbance, but the influence was insignificant. A further exemplary application might be related to structure-borne noise in coordination measurements. Machines for coordination measurements are susceptible for acoustic noise. A quality indicator might express the loudness during a measurement. In case such external loudness comes close to a threshold, e.g. predefined by the manufacturer, the indicator QoX might be defined to decrease.

In such applications, limits defined by the manufacturers of the sensor systems might be used as QoX values.

The way how individual quality indicators QoX(j) are propagated in the QUALCALC method to determine the overall indicator QoX depends on the respective measurement scenario and on the concrete operation process DOP, respectively. Thus, the propagation operation applied under QUALCALC to the quality indicators QoX(j) has to be specified in detail, e.g. by explicitly defining or specifying the concrete functions applied in the individual steps DO(j) and in the overall process DOP. In this sense, it is advantageous to use some general but adoptable functions to derive an overall quality indicator QoX for an output value RES of a operation DOP based on the quality indicators QoX(j) related to all the input/output values res(j) used. Since different data res(j) might impact with different power or weight w(j), it is desirable to also have the chance to properly weight the quality indicators QoX(j) of the respective data res(j) and step DO(j) accordingly when calculating the overall quality indicator QoX.

Thus, the overall quality indicator QoX is determined from the individual quality indicators QoX(j) and their respective weights w(j). In other words, the overall quality indicator QoX is a weighted combination of the individual quality indicators QoX(j), wherein the weighting is based on the weights w(j) of the individual indicators QoX(j).

One concept to determine the overall quality indicator QoX from individual values QoX(j) can be to use the approach of differentials of a formula FUNC for the input data values res(j) assigned to the individual quality indicators QoX(j), similar to regular error calculations. As mentioned earlier, res(j) are results and output values of respective operations DO(j) of the operation process DOP. Thus, the formula FUNC can be the formula for the measurement values from which the weights can be derived. As can be seen in FIGs 1 and 4, the process DOP processes at one or more stages DO(j) different kinds of input values res(j). Those input values res(j) can be the original measurement values MDAT(j) as well as intermediate results res(j) from intermediate operations DO(j). The formula FUNC can, therefore, be understood to represent the entirety of operations DO(j) of the process DOP and, therewith, it represents the operation process DOP as a whole. Now, the respective differential diff(j)=d_FUNC/d_res(j) can be interpreted as the contribution CON(j) of the respective individual quality indicator QoX(j) to the overall quality indicator QoX and of the particular operation DO(j) to the operation process DOP and the respective value of the differential diff(j)=d_FUNC/d_res(j) can be used as a weight w(j) for the respective QoX(j) value when calculating the overall quality indicator QoX. In first order error calculation, the value of the differential diff(j) reflects a scaling factor of the respective variable and the power of the variable as it is used in the formula FUNC. When normalizing the derivative by the original formula FUNC to get the relative error, in many cases only the power of the exponential remains as a scaling factor and thus as a weight factor. In the other cases the functional description can be more complicated and complex.

Another concept to determine the overall quality indicator QoX from input values QoX(j) could be to use functions to create a mean value as the resulting overall QoX value out of the individual QoX(j) values from all the input data used. For example, calculations might be based on typical formulas from statistics for calculating mean values, e.g the arithmetic or geometric mean. The effect that the geometric mean is always smaller than the arithmetic mean when not all input values are the same can be used to pronounce lower quality indicators a bit more in the calculation when the resulting QoX also gets smaller. This concept can be even more exploited when using the generalized mean and there is also always a relation from the parameters used in the generalized mean function, which mean value will be smaller. Some caution has to be taken, if one of the QoX(j) input values is zero, since some of the means contain a product of the input QoX which will then be zero and lose its information. In that case, a regularization can be done with a small but minimal value as lowest value to replace the effective QoX associated with a data value.

For example, the overall quality indicator QoX can be an arithmetic mean $QoX_{ari}$, a geometric mean $QoX_{geo}$, a harmonic mean $QoX_{har}$, or a generalized or "Hölder" mean $QoX_{gen}$. In those cases, the following formulas apply for the regular mean indicators QoX and for the weighted indicators wQoX:

$$QoX_{ari} = \sum_{k=1}^{n} \frac{QoX_k}{n} \quad ; \quad wQoX_{ari} = \frac{\sum_{k=1}^{n} w_k \cdot QoX_k}{\sum_{k=1}^{n} w_k}$$

$$QoX_{geo} = \sqrt[n]{\prod_{k=1}^{n} QoX_k} \quad ; \quad wQoX_{geo} = \sqrt[\sum_{k=1}^{n} w_k]{\prod_{k=1}^{n} QoX_k \cdot w_k}$$

$$QoX_{har} = n \cdot \left(\sum_{k=1}^{n} \frac{1}{QoX_k}\right)^{-1} \quad ; \quad wQoX_{har} = \left(\frac{\sum_{k=1}^{n} w_k \cdot QoX_k^{-1}}{\sum_{k=1}^{n} w_k}\right)^{-1}$$

$$QoX_{gen} = \left(\frac{1}{n} \sum_{k=1}^{n} QoX_k^p\right)^{\frac{1}{p}} \quad ; \quad wQoX_{gen} = \left(\frac{\sum_{k=1}^{n} w_k \cdot QoX_k^p}{\sum_{k=1}^{n} w_k}\right)^{\frac{1}{p}}$$

However, the weight factors w(j) are required to properly weight the individual contributions QoX(j) to the overall indicator QoX. In a basic approach, the weight factors w(j) only count the number of identical input factors and are integers. The concept of weight factors can be expanded to (positive) real numbers in order to reflect the relative importance of the respective data value or input source of values with respect to all the other input sources for a given measurement scenario, respectively. The weights w(j) to be used in the arithmetic mean or the geometric mean can also be used to weight the contributions of each QoX(j) to the final overall quality indicator QoX, regardless of the number of QoX(j) values with the same value. Quality indicators QoX(j) of the same value can still be combined or added up first, but then the weight factors w(j) of the respective contributions QoX(j) have to be added up as well. If the weight factors w(j) for one QoX(j) value are the same, the weight factors w(j) can be multiplied by the number of identical values.

In contrast to that basic approach, it is suggested to determine the weight factors w(j) with respect to a specific measurement scenario:

In a first approach, which might be designated "a priori scaling of all elements", the weights w(j), preferably corresponding to the differentials diff(j)=d_FUNC/d_res(j), are scaled or selected such that all weights w(j) for all contributions QoX(j) sum up to a value of 1. Here, the contribution of each element QoX(j) on the overall quality indicator QoX can be determined immediately when the setting is known of this element is determined. Thus, the individual QoX(j) values get summed up or multiplied afterwards.

In a second approach, which might be designated "groupwise scaling of all group elements", it is assumed that a set of weights w(j) of one group GR of comparable elements sum up to 1. Examples for such "groups GR of comparable elements" might the sensor groups GS1 - GS4, introduced in the context of the second measurement scenario. In that case, the "elements" would be the sensors 11-18 and each one of the groups GS1 - GS4 includes "comparable" elements: The sensors of a specific group GSi have at least one feature which is identical or at least comparable, e.g. the sensor type, so that these particular sensors have been chosen to form the particular group GSi. For each such group GR(g), a group quality indicator $QoX_{GR}(g)$ is calculated based on the weights and quality indicators according of the group members. Thus, the individual weights w(j) are scaled and selected, respectively, such that, for each group quality indicator $QoX_{GR}(g)$, the entirety of individual weights w(j') of those individual quality indicators QoX(j'), which contribute to the respective group quality indicator $QoX_{GR}(g)$, sums up to a fixed value FXV, e.g. FXV=1. Furtheron, those quality indicators $QoX_{GR}(g)$ of the groups GR(g) are combined with each other to form the overall quality indicator QoX, wherein again respective weights $W_{GR}(g)$ are considered. The weights $w_{GR}(g)$ of the groups GR(g) are set according to the respective importance of a group GR(g) with respect to the other groups GR(g') with g'≠g. When all groups GR(g) are equally important and, therewith, equal in weight, the weights $w_{GR}(g)$ for each group GR(g) can be set to 1 and the result can be normalized with the number of groups GR(g).

The third approach, which might be designated "separate scaling for each group", assumes that for a group of comparable elements of equal weight, the mean quality indicator $QoX_{GR}$ of each group can be calculated separately by setting the weight for each contained element to 1 and thus use the number of elements to normalize the group weight. The final mean QoX for all groups is calculated from the group values of QoX by properly weighting the different groups with respect to each other. Regarding the third approach in more detail, those individual quality indicators QoX(j') can be selected to contribute to the same group quality indicator $QoX_{GR}(g)$ which have comparable assigned weights w(j'). In principle, the individual weights w(j') of those individual quality indicators QoX(j'), which contribute to the respective group quality indicator $QoX_{GR}(g)$, can be set to the same fixed value FXV, e.g. FXV=1. Each particular group quality indicator $QoX_{GR}(g)$ can be calculated as a mean value e.g. a harmonic, arithmetic, geometric, or generalized mean, of the individual quality indicators QoX(j') contributing to that particular group quality indicator $QoX_{GR}(g)$. The group weights $w_{GR}(g)$ of the group quality indicators $QoX_{GR}(g)$ can be selected such that the group quality indicators $QoX_{GR}(g)$ are properly weighted with respect to each other, preferably such that, for a particular group quality indicator $QoX_{GR}(g')$, the group weight $w_{GR}(g')$ is selected to be the weight w(j'), preferably the mean weight w(j'), of the individual quality indicators QoX(j') contributing to the particular group quality indicator $QoX_{GR}(g')$.

In more general terms and with respect to the second approach and to the third approach, operations DO(j) which are comparable to each other can be interpreted as "comparable elements" so that they form one or more groups GR(g) as introduced in the second and third approach. Summarizing the second and third approach, one or more group quality indicators $QoX_{GR}(g)$ can be calculated in the second and/or third approach, wherein each group quality indicator $QoX_{GR}(g)$ can be calculated as a weighted combination, e.g. a weighted harmonic, arithmetic, geometric, or generalized mean. Such combination can process such individual quality indicators QoX(j') and their assigned weights w(j'), which are comparable to each other, e.g. which are assigned to operations DO(j') which are comparable to each other or which have a given feature in common or which have comparable assigned weights, respectively, e.g. corresponding to the same type of sensor or corresponding to the same type of measurement or data processing operation. The overall quality indicator QoX can then be calculated as a weighted combination, e.g. a weighted harmonic, arithmetic, geometric, or generalized mean, which combination processes the group quality indicators $QoX_{GR}(g)$ and respective, corresponding, assigned group weights $w_{GR}(g)$.

In other words, one or more virtual groups GR(g) of operations DO(j) are formed, wherein each one of the groups GR(g) comprises one or more operations DO(j), wherein those particular operations DO(j') for forming a particular group GR(g') are selected which are comparable to each other and have a given feature in common, respectively, e.g. corresponding to the same type of sensor. For each formed group GR(g), a group quality indicator $QoX_{GR}(g)$ is calculated as a weighted combination, e.g. a weighted harmonic, arithmetic, geometric, or generalized mean, which combination processes the individual quality indicators QoX(j) of the operations DO(j) of the respective group GR(g) and their assigned weights w(j). The overall quality indicator QoX is calculated as a weighted combination, e.g. a weighted harmonic, arithmetic, geometric, or generalized mean, which combination processes the group quality indicators $QoX_{GR}(g)$ of the groups GR(g) and respective group weights $w_{GR}(g)$.

In a fourth approach, which might be designated "scaling relative to the weakest element", the weights w(j), preferably corresponding to the differentials diff(j)=d_FUNC/d_res(j), can be scaled and selected, respectively, such that the lowest individual weight w(k), i.e. the individual weight w(k) of the particular individual quality indicator QoX(k) which is assigned to the operation DO(k) which has the least contribution to the overall operation process DOP, is set to a given fixed value FXG, e.g. FXG=1. For operations DO(k') with higher contribution, a weight factor >0 is added to the base weight of 1. The individual weights w(k') with k'≠k can be set according to w(k')=FXG+d(k'), wherein d(k')>0 depends on the contribution CON(k') of the respective operation DO(k') to the overall operation process DOP such that, preferably, a stronger contribution CON(k') leads to a larger d(k'). For example, a linear relationship d(k)=a+b*CON(k) with a,b≥0 might be appropriate. The normalization of the final result is normalized by the sum of the number of elements with the sum of the weight factors for normalization or the exponent of the root, respectively. This method can also be used for separate groups of elements separately.

Coming now back to the first exemplary measurement scenario which applies a single sensor 11, data from different data sources and, therewith, different quality indicators QoX(k) for such data sources are not available. Nevertheless, the concept of calculating the overall quality indicator QoX from individual quality indicators QoX(j) can be applied as shown in FIG 1 when the processing of the measurement data MDAT includes a plurality of operations DO(j). Each operation DO(j) has a result res(j) as well as a quality indicator QoX(j) assigned. Also, when the sensor 11 is measuring a plurality of data points over time to form a time series with equidistant or arbitrary time spacing between consecutive data points MDAT(j) the concept of calculating the overall quality indicator QoX from individual quality indicators QoX(j) can be applied. In this constellation, weighting factors w(j) can be used to dampen the information of more past events compared to a present event. In a simple realization, a specific weight w(j) can be based on an event number, which allows an easy implementation for equidistant time points, or it can be based on the time t expired between capturing the individual data and the point t0 in time of the most recent event.

For example, the weighting function w(t) might be w(t)=(t0-t)/T for t0-t≤T and w(t)=0 otherwise. Therein, t0 is the actual point in time, t is the time of the respective data point MDAT(t), and T represents a time span which should be considered for the evaluation. Thus, depending on the selection of T, data points samples longer ago would not be considered.

Further realizations for functions w(t) for determining weights which implement non-linear distributed weights are, for example,

$$w(t) = \cos\left(\frac{\pi}{2}\frac{t0-t}{T}\right); \quad w(t) = 1 - \sqrt[n]{\frac{t0-t}{T}}; \quad w(t) = \frac{2}{\pi}\cos^{-1}\left(\frac{t0-t}{T}\right); \quad w(t) = 1 - \frac{1}{1-\ln\left(\frac{t0-t}{T}\right)}$$

Moreover, such weighing functions might additionally be equipped with scaling parameters a and/or offsets b, e.g. $w1(t) = a \cdot w(t) + b$ with, for example, a=0. 5 and b=0.5. However, such values a, b can be chosen depending on the respective measurement scenario.

Coming back to the second exemplary measurement scenario, which applies a plurality of sensors 11-18, different realizations are imaginable. The sensing arrangement 10 might comprise multiple sensors of the same type which might located at different positions in the measurement environment. Alternatively, the arrangement 10 might comprise sensor groups, e.g. GS1 - GS4, wherein each sensor group GS comprises one or, preferably, several sensors which have a certain feature in common which motivates to group those respective sensors into a sensor group GS. For example, the common feature might be the sensor type, i.e. all temperature sensors might form a sensor group. However, different sensor groups of different type or modality might be arranged at the same position or at different positions in the measurement environment.

Thus, a group GS of sensors typically consists of a multitude of different sensors of the same and/or different modality and/or type for the same modality. For example, each one of the sensors 11-18 of the second measurement scenario might be operated like the single sensor 11 of the first measurement scenario. Therein, particular operation settings or functions of different ones of the sensors 11-18 might be different, e.g. temporal averaging might depend on particular requirements or dynamic behaviors of a respective sensor, e.g. as the bandwidth or sampling speed might also be different.

The above shall only express that types, modalities, settings etc. of different sensors of the sensor arrangement 10 might be the same or different. The same applies for the one or more sensors of a respective group, i.e. types, modalities, settings etc. of different sensors of one group GS might be the same or different, However, the sensors of a group GS have at least one feature which is identical or at least comparable so that these particular sensors have been chosen to form the particular group GS. As mentioned in the second measurement scenario, that common feature is the sensor type. In the third measurement scenario, that common feature is the effective numerical aperture as shown below.

In general, every sensor in a group GS of sensors may contribute differently to a common result or new data created. Thus, when considering corresponding data merging, fusion, software based sensing principle, or AI evaluation etc. of sensor data, the corresponding quality indicators QoX(j) might be combined in an adequate way corresponding to and/or following the logic or contribution, the related data has when the new data is generated. Thus, the weight (w(j) for each sensor or respective data input channel res(j), DO(j) has to be defined properly with regard to the envisioned application or data utilisation.

One way to determine the weights w(j) is by using the functional description for the respective step of data manipulation or evaluation in direct form or by the concept applying differentials as outlined above. Another way could be to split a system or an application into zones ZON(z), which might actually be virtual zones. Each sensor can be assigned to such a zone ZON(z). Each zone ZON(z) can be assigned a specific weight factor w(Zz) with respect to the system or application under consideration, i.e. with respect to the measurement scenario. Each sensor SEN(x) within such a zone can be assigned a specific weight factor w(x) representing the respective importance of this sensor SEN(x) to the system or application under consideration. This means, that a single individual sensor SEN(x) can be attributed to different zones ZON(z1), ZON(z2) and also weight factors w(Zz1), w(Zz2) for different subsystems or applications under consideration.

The general concept also covers the application, with a higher number of the same type of sensors applied in a system, wherein subgroups of sensors all have the same weight while other subgroups have different weights. There also might be one subgroup of sensors with higher accuracy and, thus, lower tolerance, having a higher weight than other subgroups with sensors of lower accuracy and, thus, higher tolerance.

An example for the second exemplary measurement scenario and for an application of a sensor arrangement 10 with a plurality of sensors might be a pump station 100 with multiple pumping systems 110, each one comprising a pump unit 111, a motor 112, and a controller unit 113 as shown in FIG 5. Each pumping system 110 contains multiple temperature sensors 11 in its units 111, 112, 113. Typically, different sensors 11 are operated with different accuracy levels.

Each unit 111, 112, 113 can be assigned to a zone ZON. For example, controller, motor, pump, and potentially other components like tubing etc. might form different zones ZON(1), ZON(2), ZON(3). On a system level for a pumping system 110, the measured temperature values of the sensors 11 of a zone ZON(m) can be combined and compared to corresponding values of neighboring zones ZON(n) with n≠m to analyse the operational condition of this pump 111 in the particular zone ZON(m) in the overall environment of the pump station 100.

From a high level perspective, the overall pump station 100 is of interest but not the individual sensors or components and, thus, the sensors of all units of same type can be grouped, e.g. all pump units, all motors, all controllers, and all tubings, in order to derive some information about the overall condition of the pumping station.

Coming back to the third exemplary measurement scenario of FP microscopy, all light sources arranged on the same circle can be considered to have a common feature for the FP microscope, namely the effective numerical aperture for imaging the object, which has a direct impact on the sampling of the respective individual images. Thus, due to that common feature, the light sources on the same circle can be considered to form a group GLS, as indicated in FIG 6 for one of the circles. Consequently, the different image capturing actions performed by the camera sensor when different light sources on the same circle, i.e. of a group GLS, are activated, also form a group GL, in principle corresponding to the groups GS introduced in the second exemplary measurement scenario. With the image capturing actions representing operations DO(j), those operations DO(j) can also be considered to form a group GLS of operations.

Each imaging action and operation DO(j), respectively, results in an individual image and result res(j), respectively. Thus, as above, each operation DO(j) has a result res(j) as well as a quality indicator QoX(j) assigned. Regarding the weights w(j), it can be assumed that the operations DO(j) of a group GL and correspondingly the assigned quality indicators QoX(j) should have the same weight $w_{GL}(j)$. Assuming, for example, that for each group GL the sum of weights $w_{GL}$ should be 1, as suggested in the second approach designated "groupwise scaling of all group elements", each individual weight $w_{GL}(j)$ can be calculated to be 1/NGL, wherein NGL is the number of elements in the group GL.

In principle, it is possible to have a product out of all QoX(j) in some form, like the singularity for the geometric mean introduced above, where the result will be zero if only one of the contributions QoX(j) is zero. This would be a very strong indicator for a critical scenario, where all input signals have to fulfill a minimum data quality criterion. This feature could be used in combination with a discriminator function for at least the most critical QoX(j) when the respective QoX(j) is set to zero if it is lower than a given threshold value. A quality indicator QoX(j) of a low value or even zero can be interpreted, e.g. by a computer, as indicator that data is available but the trust level has to be obeyed carefully or it can be exploited to avoid missing data in a data stream for the sake of consistency.

In addition, a quality indicator QoX(j) can be attributed to indirect factors of a measurement like a remaining battery capacity for battery powered sensors, a cross-talk or in-coupling of external signals in power lines or even signal lines.

In the above concrete description in the context of FIGs 1-6, the overall quality indicator QoX is calculated in the QUALCALC method as a mean value of individual quality indicators QoX(j). However, the QUALCALC method can actually apply any kind of function to combine the individual quality indicators QoX(j) to determine the overall quality indicator QoX, e.g. by applying a polynomial function which considers and processes the individual quality indicators QoX(j) instead of calculating a mean value. Further ways to determine the overall quality indicator QoX can be based on statistical evaluations, e.g. %-quantiles, e.g. 20% , 30%, 70%, or 80%.

Thus, in general terms, the approach QUALCALC introduced herewith applies an explicit, i.e. known and/or pre-defined, function which processes the quality indicators QoX(j) to determine the overall quality indicator QoX, e.g. based on mean value calculations or with polynomial functions.

The new concept of determination of an overall quality indicator QoX from a plurality of individual quality indicators QoX(j) based on respective weights w(j) as introduced herein allows to derive and also trace back a quality of sensing, quality of data, and/or quality of information from underlying information characterizing the respective data utilization and/or interpretation in data processing chains of modern and even modular data processing chains. The quality of sensing QoS information makes the data agnostic to the sensing domain, so that a data scientist later on in the processing chain has a strong indicator for the measurement domain to characterize the data quality. When data gets processed further on, the same data scientist can attribute a new quality of data QoD value on the data generated out of the underlying data stream in order to keep a later user of the generated data aware of the respective data quality level. This will help to underpin any conclusion drawn on the basis of this data or any information interpreted from the data in fully transparent mode.

The underlying approach elaborated herein builds on certain general conceptual topics:
It exploits the concept of the quality indicator QoX to describe the trustworthiness or quality of measured or determined data points in absolute or relative units, preferably as a unitless number in a range [0; 1]. The common range is of high practical interest to further combine QoX values properly in a well defined manner. The common range can also be achieved by rescaling other QoX metrics to the desired range of [0 ; 1] based on a given allowed or expected value range, even for values with a metric.

Furthermore, the approach provides an introduction to technical and/or physically motivated aspects of weight factors as well as a suggestion and description of different ways to determine the weight factors application specific. This stands in contrast to descriptive statistics where weight factors are simply count based representing elements of the same numerical values. This interpretation of such weight factors is the key element for all consecutive metrics for weighted QoX determination.

Moreover, it provides a description of different ways how to combine quality indicators QoX(j) in order to calculate a new and resulting overall quality indicator QoX for the output of a operation process by a given formula or computing guideline. As a central example, the various mean value types were chosen to compute a new QoX output out of a larger number of QoX(j) values associated with input data MDAT and res(j). A minimum value or a percentile value also can be used, but such values would neglect the whole rest of other values. Therefore, a method is described with a variety of different calculation functions and in full generalization as a generic mean value.

The approach introduces a way to define weight factors even for a sequence of data points like in a time series with some different types of fading out the information or QoX(j) from older data. This method can also be adopted when calculating a somehow averaged value from the data points and directly transferred to the QoX values as well.

Different ways of normalizing and generating weight factors w(j) are suggested and a concept of application specific normalization of such weight factors w(j) is introduced where the same data source may be attributed to different QoX(j) values for different applications.

Last but not least, the concept of quality indicator QoX determination introduced herein strongly supports the digitalization initiatives in metrology with the supplementary information on the circumstances of a measurement. To a certain extent, this replaces the pure feeling of a metrologist on the respective dataset. The concept proposed is also compatible with the concept of the XML-structure of the digital calibration certificate DCC.

Although specific embodiments have been illustrated and described herein, it will be appreciated by those of ordinary skill in the art that a variety of alternate and/or equivalent implementations exist. It should be appreciated that the exemplary embodiments are only a few examples with illustrative character which are not intended to limit or restrict the scope, applicability, or configu-ration in any way. Rather, the foregoing summary and detailed de-scription will provide those skilled in the art with a convenient road map for implementing at least an embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Specific nomenclature used in the foregoing specification is used to provide a thorough understanding of the invention. However, it will be apparent to one skilled in the art in light of the specification provided herein that the specific details are not re-quired in order to practice the invention. Thus, the foregoing descriptions of specific embodiments of the present invention are presented for purposes of illustration and description. They are not intended to be exhaustive or to limit the invention to the precise forms disclosed. Obviously, many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

Throughout the specification, the terms "including" and "in which" are used as the plain-English equivalents of the respective terms "comprising" and "wherein", respectively. Moreover, the terms "first", "second", and "third" etc. are used merely as labels, and are not intended to impose numerical requirements on or to establish a certain ranking of importance of their objects. In the context of the present description and claims the conjunction "or" is to be understood as including (i.e in the sense of "and/or"), but not exclusive (i.e. not in the sense of "either A or B").

**Claims**

**1.** Method for determining an overall quality indicator QoX for a measurement MEAS, wherein

- an operation process DOP processes measurement data MDAT generated in the measurement MEAS to determine a result RES corresponding to the measurement data MEAS,
- the operation process DOP includes one or more operations DO(j) for the processing of the measurement data MDAT, wherein each operation DO(j) is **characterized by** an individual quality indicator QoX(j),

and wherein
- the overall quality indicator QoX is determined from a combination of the individual quality indicators QoX(j).

2. Method according to claim 1, wherein the combination processes the individual quality indicators QoX(j) to determine a mean value QoX of the individual quality indicators QoX(j), wherein the determined mean value represents the overall quality indicator QoX.

3. Method according to claim 2, wherein

- each individual quality indicator QoX(j) is assigned a weight w(j),
- the combination is a weighted combination, wherein the weighted combination processes the individual quality indicators QoX(j) and their assigned individual weights w(j) to determine a weighted mean value QoX=wQoX of the individual quality indicators QoX(j),
- the determined weighted mean value QoX=wQoX represents the overall quality indicator QoX.

4. Method according to claim 3, wherein the individual weights w(j) correspond to differentials diff(j)=d_FUNC/d_res(j) of a formula FUNC which represents the operation process DOP and its operations DO(j), wherein res(j) are results of respective operations DO(j) of the operation process DOP and wherein each differential diff(j)=d_FUNC/d_res(j) represents the contribution CON(j) of the respective individual quality indicator QoX(j) to the overall quality indicator QoX and/or of the particular operation DO(j) to the operation process DOP.

5. Method according to claim 4, wherein the individual weights w(j) corresponding to the differentials diff(j)=d_FUNC/d_res(j) are scaled such that the entirety of individual weights w(j) sums up to a given value, preferably to a value of 1.

6. Method according to claim 4, wherein the individual weights w(j) corresponding to the differentials diff(j)=d_FUNC/d_res(j) are scaled such that

- the lowest individual weight w(k) is set to a given fixed value FXG,
- the individual weights w(k') with k'≠k are set according to w(k')=FXG+d(k'), wherein d(k')>0 depends on the contribution CON(k') of the respective operation DO(k') to the overall operation process DOP such that, preferably, a stronger contribution CON(k') leads to a larger d(k').

7. Method according to any one of claims 3 to 6, wherein

- one or more group quality indicators QoX$_{GR}$(g) are calculated, wherein each group quality indicator QoX$_{GR}$(g) is calculated as a weighted combination which processes such individual quality indicators QoX(j') and their assigned weights w(j'), which are comparable to each other,
- the overall quality indicator QoX is calculated as a weighted combination which processes the group quality indicators QoX$_{GR}$(g) and respective group weights w$_{GR}$(g) .

8. Method according to claim 7, wherein the individual weights w(j) are scaled such that, for each group quality indicator QoX$_{GR}$(g),

- the entirety of individual weights w(j') of those individual quality indicators QoX(j'), which contribute to the respective group quality indicator QoX$_{GR}$(g), sums up to a predefined value FXV, and
- the respective group weight w$_{GR}$(g) is set according to the respective importance and contribution, respectively, with respect to the other group quality indicators QoX$_{GR}$(g') with g'≠g.

9. Method according to claim 7, wherein

- those individual quality indicators QoX(j') are selected to contribute to the same group quality indicator QoX$_{GR}$(g) which have comparable assigned weights w(j'),
- each particular group quality indicator QoX$_{GR}$(g) is calculated as a mean value of the individual quality indicators QoX(j') contributing to that particular group quality indicator QoX$_{GR}$(g),
- the group weights w$_{GR}$(g) of the group quality indicators QoX$_{GR}$(g) are selected such that the group quality indicators QoX$_{GR}$(g) are weighted with respect to each other, preferably such that, for a particular group quality indicator QoX$_{GR}$(g'), the group weight w$_{GR}$(g') is selected to be the weight w(j'), preferably the mean weight w(j'), of the individual quality indicators QoX(j') contributing to the particular group quality indicator QoX$_{GR}$(g').

10. Method according to any one of claims 1 to 9, wherein each operation DO(j) generates a result res(j) based on input data, wherein the quality indicator QoX(j) characterizing the data operation DO(j) represents a quality level of the result res(j).

11. Method according to any one of claims 1 to 10, wherein a respective operation DO(j) includes

- sensing of a parameter to be measured and/or
- sampling of the measurement data MDAT, and/or
- making data agnostic to a respective measurement system and/or
- provisioning of data from a first instance to a second instance of a measurement system, and/or
- processing of data and/or
- combining data provided by a first sensor of the measurement system with data provided by another sensor of the measurement system to generate new data and/or
- feeding data to mathematical or physical models and/or
- fusing the data into a more concise dataset and/or
- mimicking new or non-physical sensors by a software and/or
- applying a method of computer learning or artificial intelligence on the data,

wherein, in each case, such data can be the measurement data itself or measurement data previously processed in an operation DO(j') with j'Oj.

12. Evaluation system (20) for a sensing device (1), which includes a sensor arrangement (10) with at least one sensor for performing a measurement MEAS, wherein the evaluation system (20) is configured to determine the overall quality indicator QoX for the measurement MEAS according to any one of claims 1 to 11.

13. Evaluation system (20) according to claim 12, comprising a processor for carrying out the method according to any of claims 1 to 11.

14. Evaluation system (20) according to any one of claims 12 to 13, wherein the evaluation system (20) is connected to a sensor arrangement (10) of the sensing device (1), wherein the sensor arrangement (10) comprises at least one sensor (11) for performing the measurement MEAS to generate the measurement data.

15. Computer program comprising instructions which, when the program is executed by a computer, cause the computer to carry out the method according to any of claims 1 to 11.

## FIG 1

## FIG 2

# FIG 3

## FIG 4

- DO(1)-DO(8)
- MEAS
- res(1)-res(8); MDAT(1)-MDAT(8)
- DO(9)-DO(16)
- res(9)-res(16)
- DO(17)-DO(20)
- res(17)-res(20)
- DO(21)
- res(21)
- DO(...)
- res(...)
- DO(J)
- DOP
- RES=res(J)

## FIG 5

## FIG 6

**EP 4 425 352 A1**

## EUROPEAN SEARCH REPORT

Europäisches
Patentamt
European
Patent Office
Office européen
des brevets

Application Number

EP 23 16 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EICHSTÄDT SASCHA ET AL: "Toward Smart Traceability for Digital Sensors and the Industrial Internet of Things", SENSORS, [Online] vol. 21, no. 6, 12 March 2021 (2021-03-12), page 2019, XP093080043, DOI: 10.3390/s21062019 [retrieved on 2023-09-14] * sections 1 and 3 * | 1-15 | INV. G06F17/18 G01D3/08 G01D21/00 G02B21/36 G06T5/50 |
| X | KUKA CHRISTIAN ET AL: "Enriching sensor data processing with quality semantics", 2014 IEEE INTERNATIONAL CONFERENCE ON PERVASIVE COMPUTING AND COMMUNICATION WORKSHOPS (PERCOM WORKSHOPS), IEEE, [Online] 24 March 2014 (2014-03-24), pages 437-442, XP032594862, DOI: 10.1109/PERCOMW.2014.6815246 [retrieved on 2014-05-13] * abstract; figure 1 * | 1-15 | |
| A | TEH HUI YIE ET AL: "Sensor data quality: a systematic review", JOURNAL OF BIG DATA, [Online] vol. 7, no. 1, 11 February 2020 (2020-02-11), XP055947769, DOI: 10.1186/s40537-020-0285-1 Retrieved from the Internet: URL:http://link.springer.com/article/10.11 86/s40537-020-0285-1/fulltext.html> [retrieved on 2023-09-14] * page 24 - page 27 * | 1-15 | TECHNICAL FIELDS SEARCHED (IPC) G06F G01D G02B |

The present search report has been drawn up for all claims

| Place of search | Date of completion of the search | Examiner |
|---|---|---|
| Berlin | 14 September 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 425 352 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021053374 A1